# EUROPÄISCHE PATENTANMELDUNG

(11) **EP 1 342 535 A1**
(43) Veröffentlichungstag der Anmeldung: **10.09.2003**
(21) Anmeldenummer: 03004484.6
(22) Anmeldetag: 28.02.2003
(51) Int. Cl.: B23Q 39/04, B27M 1/08

(54) **In-Line-Bearbeitungsvorrichtung für eine taktweise Bearbeitung von Holz-, Faser-, Kunststoffplatten oder dergleichen**

(30) Priorität: 01.03.2002 DE 10208892
(71) Anmelder: Wilhelm Lehbrink GmbH & Co. KG, 33813 Oerlinghausen (DE)
(72) Erfinder: Burow, Hans-Jürgen, 33813 Oerlinghausen (DE)
(74) Vertreter: Flügge, Christian

(57) **Zusammenfassung**

In einer In-Line-Bearbeitungsvorrichtung (1) erfolgt eine taktweise Bearbeitung von Holz-, Faser- und Kunststoffplatten oder dergleichen, in einer Vielzahl unmittelbar aufeinander abfolgender Bearbeitungsstationen (4-10), die von zwei parallelen Fertigungslinien (11,12) durchlaufen werden, die taktversetzt jeweils eine Bearbeitung in einer Bearbeitungsstation (4-10) bzw. einen Vorschub gestatten.

## Beschreibung

Die Erfindung betrifft eine In-Line-Bearbeitungsvorrichtung für eine taktweise Bearbeitung von Holz-, Faser- und Kunststoffplatten oder dergleichen, insbesondere für die Herstellung von Lautsprecherfronten und/oder Rückseiten.

In-Line-Bearbeitungsvorrichtungen für Holz-, Faser- und Kunststoffplatten oder dergleichen sind in einer Vielzahl von Ausführungsformen bekannt und bewährt, insbesondere in der Möbelindustrie. In derartigen Bearbeitungsvorrichtungen werden Plattenrohlinge zumeist auf Maß geschnitten, mit entsprechenden Bohrungen für Scharniere und Fachböden versehen, ggf. auch genutet und gefast. Am Ende einer solchen Bearbeitungsvorrichung besteht häufig noch die Möglichkeit, die Kanten der Platten mit einem Umleimer zu versehen.

Diese Bearbeitungsvorrichtungen weisen den Vorteil einer schnellen Arbeitsabfolge auf bei dem Nachteil einer enormen Baulänge, die durchaus 50 m und mehr betragen kann. Da diese Bearbeitungsvorrichtungen regelmäßig für maximal mögliche Platten-Abmessungen ausgelegt sind, beispielsweise für eine Plattenlänge von mehr als 2 Metern bei Schränken, ist die Bearbeitung kleiner Plattengrößen regelmäßig aufwendig und insbesondere langsam.

Vor diesem technischen Hintergrund macht die Erfindung es sich zur Aufgabe, eine In-Line-Bearbeitungsvorrichtung zur Verfügung zu stellen, die äußerst kompakt aufgebaut ist und die eine hohe Fertigungskapazität insbesondere für vergleichsweise kleine Platten, vorzugsweise Lautsprecherfronten und/oder Rückseiten, aufweist.

Zur Lösung dieser technischen Problematik wird gemäß des Anspruchs 1 auf eine In-Line-Bearbeitungsvorrichtung für eine taktweise Bearbeitung von Holz-, Faser- und Kunststoffplatten oder dergleichen abgestellt, bei der die Bearbeitung in einer Vielzahl unmittelbar aufeinander abfolgender Bearbeitungsstationen erfolgt, die von zwei parallelen Fertigungslinien durchlaufen werden, die taktversetzt jeweils eine Bearbeitung in einer Bearbeitungsstation bzw. einen Vorschub gestatten.

Zwei Fertigungslinien, parallel und unmittelbar benachbart angeordnet, gestatten zunächst eine erhebliche Kapazitätserhöhung bei der Bearbeitung der eingangs erwähnten Platten. Die Bearbeitung erfolgt erfindungsgemäß in einer Bearbeitungsstation lediglich in einer Fertigungslinie, während bei der anderen Fertigungslinie ein Vorschub stattfindet. Von daher können die Fertigungslinien sehr nahe benachbart sein, ohne dass sich Werkstücke bearbeitende Werkzeuge gegeneinander stören.

Insbesondere kann auch daran gedacht sein, in einer Fertigungslinie eine Front- und in der zweiten Fertigungslinie eine Rückseite bspw. eines Lautsprechers zu fertigen, so dass am Ende der Fertigungslinien Paare von fertig bearbeiteten Platten zur Verfügung stehen. Aufwendige und zeitintensive Werkzeugwechsel können bei einer derartigen Fertigung entfallen, wenn auf herkömmlichen Vorrichtungen solche Paare nacheinander hergestellt werden.

In konstruktiver Ausgestaltung ist vorgesehen, dass die Bearbeitungsstationen modular ausgebildet sind. Insbesondere erfolgt ein Verzicht auf eine durchgängige Vorschubsvorrichtung für die Werkstücke. Hierdurch wird bei der Ausbildung von Transportvorrichtungen der einzelnen Bearbeitungsstationen, beispielsweise als Riemen- oder Bandförderer ausgebildet, regelmäßig für die Übergabe von einer zur nachfolgenden Bearbeitungsstation eine Werkstück-Mindestlänge erforderlich sein, jedoch ist ein Austausch, eine Reparatur, oder die Wartung einer Bearbeitungsstation erheblich vereinfacht. Darüber hinaus können an den Umlenkstellen der Riemen, Bänder oder Ketten angefallene Bearbeitungsreststücke oder dergleichen in einfacher Weise herabfallen, ohne dass diese die gesamte Bearbeitungsvorrichtung durchlaufen.

Es kann vorgesehen sein, dass in einer Bearbeitungsstation mit einem Portal mit einer Arbeitsvorrichtung für beispielsweise ein Fräsen, Bohren, Sägen usw. zunächst das Werkstück einer Fertigungslinie beärbeitet wird, das dann für einen Vorschub freigegeben wird, indem die Arbeitsvorrichtung durch das Portal zu dem zwischenzeitlich festgelegten Werkstück der zweiten Fertigungslinie verfahren wird. Zweckmäßiger und insbesondere schneller ist die Variante, dass eine Bearbeitungsstation mit einem Portal mit zwei Arbeitsvorrichtungen beide Fertigungslinien quer zu der Vorschubsrichtung überspannt, welche Arbeitsvorrichtungen wechselnd die Werkstücke der beiden Fertigungslinien bearbeiten.

Bevorzugt wird jedoch eine Bearbeitungsstation mit zwei Portalen mit jeweils einer Arbeitsvorrichtung, die beide Fertigungslinien quer zu der Vorschubsrichtung überspannen. Ein Höchstmaß an Flexibilität als auch an Fertigungsgeschwindigkeit ist durch diese Maßnahme gewährleistet. Dennoch ist eine Programmierung einer Steuervorrichtung bei grundsätzlich identischen Arbeiten für beide Portale und Arbeitsvorrichtungen sehr vereinfacht, da die Arbeiten lediglich zeitversetzt durchgeführt werden.

Arbeitsvorrichtungen der in Rede stehenden Art, beispielsweise CNC-Arbeitsvorrichtungen, können regelmäßig mit unterschiedlichsten Werkstücken, beispielsweise Fräsern, Bohrern oder dergleichen versehen werden, so dass unterschiedlichste Fertigungen möglich sind. Zweckmäßigerweise wird deshalb vorgesehen, dass wenigstens zwei aufeinanderfolgenden Bearbeitungsstationen jeweils ein Zwischenmagazin zugeordnet ist für die Aufnahme, Rücknahme und Übergabe von Werkzeugen an die jeweiligen Arbeitsvorrichtungen und für die Annahme und Rückgabe an ein Übergabesystem eines Werkzeugshauptmagazins. Solche Zwischenmagazine können vielfältig ausgebildet sein, beispielsweise als Tellermagazin oder dergleichen mehr. Auch für die Ausbildung des Werkzeughauptmagazins stehen viele Möglichkeiten offen, wobei in konstruktiver Ausgestaltung bevorzugt wird, dass das Werkzeughauptmagazin als mehretagiges Linearmagazin ausgebildet ist und sich parallel der Bearbeitungsstationen erstreckt. Durch diese Maßnahme wird eine insgesamt schmale Konstruktion erreicht, auch wenn vorgesehen ist, dass das Magazin von den Bearbeitungsstationen ausreichend beabstandet ist für eine manuellen Austausch beispielsweise verbrauchter gegen neue Werkzeuge.

Es hat sich bewährt, wenn vorgesehen ist, dass eine Bearbeitungsstation für jede Fertigungslinie wenigstens einen, gegen ein Mittelstück auf die Werkstückbreite einstellbaren Außenrahmen aufweist, so dass ein Werkstück bei der Bearbeitung gegen ein seitliches Auswandern durch einen Außenrahmen gegen das Mittelstück festgelegt ist. Hierbei sind mehrere Varianten durchaus möglich, bspw. dass ein einstellbarer Außenrahmen gegen ein nichteinstellbares Mittelstück verfahren wird, insbesondere dass beide Außenrahmen symmetrisch gegen ein feststehendes Mittelstück verfahren werden kann. Auch kann das Mittelstück geteilt ausgebildet und mit beiden Hälften einstellbar ausgebildet werden, so dass eine Einstellung auf die Werkstückbreite mittig einer jeden Fertigungslinie erfolgen kann. Die Freizügigkeit dieser Gestaltungsmöglichkeiten wird unter anderem durch die beide Fertigungslinien überspannenden Portale gewährleistet.

Hiervon unabhängig ist bevorzugt, dass der Außenrahmen mit einem Grundmaschinenbett quer zu der Förderrichtung verfahrbar ist. Infolge dieser Maßnahme können eine Vielzahl von Hilfsvorrichtungen gleichzeitig mit verfahren und positioniert werden.

Zu diesen Hilfsvorrichtungen gehören beispielsweise an den dem Werkstück zugewandten Längskanten des Außenrahmens angeordnete Niederhalter. Gegen diese und an dem Mittelstück angeordnete Niederhalter hält während der Bearbeitung von unten jeweils eine Spannvorrichtung das Werkstück. Fräsen oder Bohren von oben ist durch diese Maßnahme ermöglicht.

In konstruktiver Ausgestaltung kann vorgesehen sein, dass eine Spannvorrichtung mit dem Außenrahmen verfahrbar ist. Eine exakte Positionierung für das Festlegen, unabhängig von den Abmessungen des Werkstückes, kann so jederzeit erreicht werden. Bevorzugt ist hierbei vorgesehen, dass eine Spannvorrichtung an einer in einem Querschnitt im wesentlichen L-förmigen Trägervorrichtung angeordnet ist, die mit einem Schenkel an einer aufgehenden Rahmenwange angebunden ist und auf einem freien, auf das Werkstück zuweisenden Schenkel die Spannvorrichtung trägt.

Die Spannvorrichtungen selbst können als Hubvorrichtungen, bspw. als Hubzylinder, ausgebildet sein. Bevorzugt wird jedoch, dass die Trägervorrichtungen vertikal verfahrbar an den aufgehenden Rahmenwangen angebunden sind. Infolge dieser Maßnahme können die Spannvorrichtungen selbst massiv und insbesondere passiv ausgebildet sein, so dass elektrische Kabel, Hydraulik- oder Pneumatikschläuche hin zu den Spannvorrichtungen entfallen können.

Für jede Fertigungslinie sind in weiterer (Ausgestaltung zwei parallele Transportvorrichtungen für ein Werkstück vorgesehen, d.h. für die beiden Fertigungslinien einer Bearbeitungsstation insgesamt vier. Die Transportvorrichtungen einer Fertigungslinie, beispielsweise Band- oder Riemenförderer, sind voneinander beabstandet, so dass in dem Zwischenraum zwischen diesen Transportvorrichtungen bei der Bearbeitung des Werkstückes anfallende Reststücke niederfallen können.

Zweckmäßigerweise kann eine Transportvorrichtung mit einem Außenrahmen quer zu der Vorschubsrichtung verfahrbar angeordnet sein, so dass mit dem Außenrahmen auch die Transportvorrichtungen auf die Werkstückbreite gleichsam automatisch mit eingestellt werden können.

Sofern auch ein, ggfls. geteiltes, verfahrbares Mittelstück vorgesehen sein sollte, wird auch eine Transportvorrichtung gegenüber einem Außenrahmen insbesondere mit einer Hälfte des Mittelstücks quer zu der Vorschubsrichtung verfahrbar sein.

Damit das Werkstück auf großer Fläche bearbeitbar ist, ist weiter vorgesehen, dass die Transportvorrichtungen absenkbar sind. Insbesondere ist weiter vorgesehen, dass während der Bearbeitung eines Werkstückes die Transportvorrichtungen abgesenkt und aus dem Bearbeitungsprofil gefahren sind, insbesondere quer zu der Vorschubsrichtung und unabhängig von einem Außenrahmen oder dem Mittelstück. Damit ist das gesamte Bearbeitungsprofil frei für ein Niederfallen ausgefräster Reststücke oder dergleichen. Auch wird die Transportvorrichtung bzw. deren Band oder deren Riemen etc. kaum verschmutzt.

Zweckmäßigerweise werden weiter die Transportvorrichtungen während der Bearbeitung eines Werkstückes unter die freien Schenkel der Trägervorrichtungen der Spannvorrichtungen gefahren sein, so dass diese beiden Vorrichtungen voneinander frei ihre jeweiligen Aufgaben erfüllen können.

Mit dem Verfahren der Transportvorrichtungen erfolgt bevorzugt deren Reinigung durch eine vorgesehene Reinigungsvorrichtung. Auch hier bieten sich eine Vielzahl von Varianten an, z.B. Bürsten, die die Transportbänder bzw. Transportriemen, -rollen oder -kugeln reinigen.

Die Anordnung zweier beabstandeter, paralleler Transportvorrichtungen erlaubt weiter, dass zwischen diesen Fertigungslinien ein entfernbarer Längsanschlag anordbar ist, der beispielsweise pneumatisch abgesenkt oder abgekippt werden kann. Ein besonderer Rahmen oder eine besondere Führung für einen Längsanschlag oberhalb der Transportvorrichtungen kann damit entfallen.

Unterhalb der Transportvorrichtungen, insbesondere wenn diese aus dem Bearbeitungsprofil gefahren sind, ist weiter eine das Bearbeitsprofil überdeckende Entsorgungsvorrichtung für Reststücke und dergleichen vorgesehen. Es heißt dies, dass sich die Entsorgungsvorrichtung über das maximale Bearbeitungsprofil erstreckt und räumlich tiefer angeordnet ist als die Unterseite der Transportvorrichtung ohne notwendigerweise diese zu untergreifen, insbesondere so tief, dass die Transportvorrichtung abgesenkt und verfahren werden kann.

In konstruktiver Ausgestaltung kann vorgesehen sein, dass die Entsorgungsvorrichtung als ein mehrere Bearbeitungsstationen durchsetzender Bandförderer ausgebildet ist, der kopfseitig der Bearbeitungsvorrichtung dann Reststücke, für eine Entsorgung auswirft.

An die Bearbeitungsvorrichtung nach der Erfindung angepaßt sind eine Zuführvorrichtung für Plattenrohlinge und eine Entnahmevorrichtung für fertig bearbeitete Platten, insbesondere Lautsprecherfront- und Rückseiten.

So ist eine Zuführvorrichtung mit einem zwei Traversen an zwei Supporten aufweisenden Portal vorgesehen, von denen eine erste Traverse von wenigstens einem, bevorzugt zwei Materialstapeln zu bearbeitende Werkstücke wechselweise in den jeweiligen Einlauf einer Fertigungslinie umsetzt und die zweite Traverse angelieferte Werkstücke auf dem wenigstens einen, bevorzugt zwei Materialstapel oder einer Zwischenablage absetzt.

Sind die Materialstapel auf Hubtischen abgesetzt, kann die erste Traverse als einfache Saugtraverse nach dem Stand der Technik ausgebildet sein. Insbesondere kann dann auch auf eine Hubvorrichtung dieser Traverse verzichtet werden.

Eine Anlieferung der Rohlinge kann bspw. in üblicher Weise palettiert auf einer Rollenbahn erfolgen. Die die Platten von einem solchen Palettenstapel auf die Materialstapel bzw. eine Zwischenablage umsetzende Saugtraverse wird dann über eine vertikale Stellmöglichkeit verfügen und kann bspw. mit Klinken versehen auch für eine Stapeln und/oder Umsetzen leerer Paletten herangezogen werden.

Der Zuführvorrichtung weitgehend entsprechend ist eine Entnahmevorrichtung mit einem zwei Traversen an zwei Supporten aufweisenden Portal vorgesehen, von denen eine erste Traverse fertige Werkstücke wechselweise von dem jeweiligen Auslauf einer Fertigungslinie auf wenigstens einen Materialstapel, bevorzugt zwei Materialstapel, umsetzt und die zweite Traverse die Werkstücke von dem wenigstens einen Materialstapel auf eine Fördervorrichtung für einen Abtransport oder eine Zwischenablage.

Die Zuführvorrichtung und die Entnahmevorrichtung sind eigenständige Komponenten der Bearbeitungsvorrichtung nach der Erfindung. Infolge können diese platzsparend, insbesondere die Gesamtlänge begrenzend, quer zu der Längserstreckung der Bearbeitungsvorrichtung auch angeordnet sein, so dass in einer Draufsicht die Bearbeitungsvorrichtung mit angeschlossener Zuführvorrichtung und Entnahmevorrichtung einen U- oder Z-förmigen Grundriß aufweisen kann.

Die Bearbeitungsvorrichtung nach der Erfindung wird anhand der Zeichnung näher erläutert, in der zum Teil schematisch Ausführungsbeispiele leiglich dargestellt sind. In der Zeichnung zeigt :
- Fig. 1:: in einer Draufsicht eine Bearbeitungsvorrichtung mit angeschlossener Zuführvorrichtung und Entnahmevorrichtung,
- Fig. 2:: in vereinfachter Darstellung eine stirnseitige Ansicht einer Bearbeitungsstation und
- Fig.3:: in der Darstellung nach Fig. 2 die Bearbeitung eines Werkstückes.

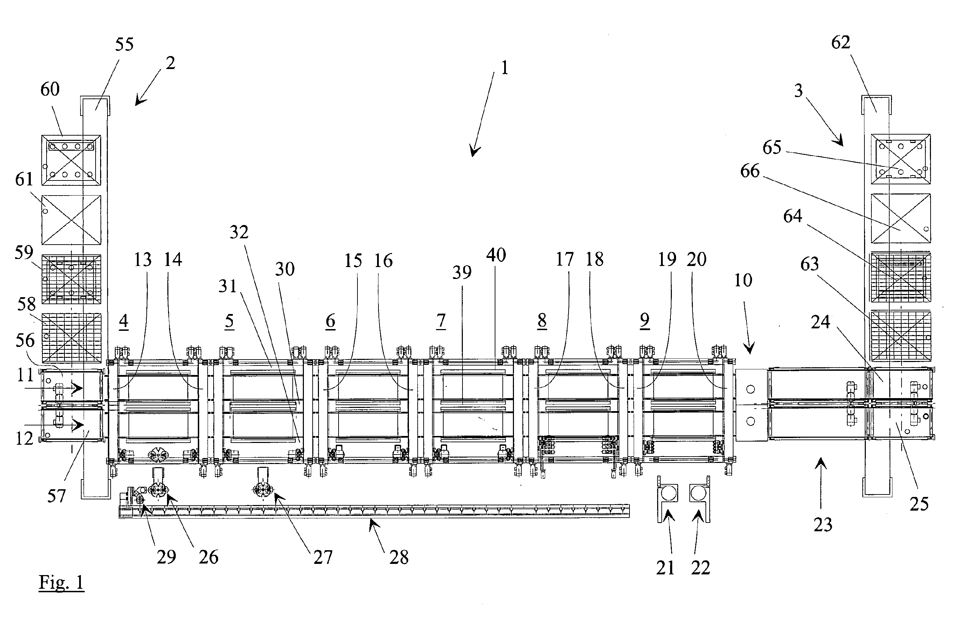

Fig. 1 zeigt in einer Draufsicht eine Bearbeitungsvorrichtung 1 nach der Erfindung mit angeschlossener Zuführvorrichtung 2 für eine Zuführen der Plattenrohlinge und einer Entnahmevorrichtung 3 für die Entnahme der fertigen Platten, bspw. Front- und/oder Rückseiten von Lautsprechern, von U-förmigem Grundriß.

Beispielhaft besteht die Bearbeitungsvorrichtung 1 aus sechs modular aufgebauten, unmittelbar, in-line anschließenden Bearbeitungsstationen 4-9 mit daran weiter anschließenden Bearbeitungsstationen 10 und 23.

Die Bearbeitungsstationen 4-10,23 werden von zwei parallelen Fertigungslinien 11,12 durchlaufen, auf denen taktversetzt in einer Station ein Werkstück einer Fertigungslinie bearbeitet und ein Werkstück der anderen Fertigungslinie einen Vorschub erfährt. Infolgedessen können die Fertigungslinien 11,12 sehr eng benachbart angeordnet sein, ohne dass es zu störenden Begegnungen von Werkzeugen oder dergleichen kommt.

Für die Fertigung von Lautsprecherfront- und/oder Rückseiten können die beiden ersten Bearbeitungsstationen 4,5 bspw. als Frässtationen ausgelegt sein, in denen mit Werkzeugkomplettsätzen die Lautsprecher-Ausfräsungen, Konturfräsungen mit Schaftfräsern und/oder Bohrungen vorgenommen werden. Hierzu sind beide Bearbeitungsstationen 4,5 im wesentlichen gleichartig ausgebildet und werden die konstruktiven Details anhand der Bearbeitungsstation 4 weiter erläutert.

Die Bearbeitungsstation weist zwei die Fertigungslinien 11,12 quer zur Vorschubsrichtung überspannende Portale 13,14 auf, die jeweils mit nicht dargestellten Arbeitsvorrichtungen für die genanten Arbeiten versehen sind. Die Portale 13,14 sind in Vorschubsrichtung verfahrbar und weisen weiter jeweils einen Kreuzsupport auf, so dass insbesondere NC-gesteuert jeweils eine dreiachsige Bewegung der Arbeitsvorrichtung sichergestellt ist, die bspw. als Hochgeschwindigkeitsfrässpindel ausgebildet sein kann.

Die Bearbeitungsstationen 6,7 sind im wesentlichen gleichartig als Bohrstationen ausgelegt für das Bohren der Befestigungsbohrungen für Lautsprecher. An Portalen 15,16 mit Kreuzsupport, durch den modularen Aufbau im wesentlichen den Portalen 13,14 der Frässtationen 4,5 entsprechend ausgebildet, kann bspw. jeweils eine pneumatische Bohreinheit als Arbeitsvorrichtung vorgesehen sein, die vier pneumatisch angetriebene Bohraggregate aufweist. Zweckmäßigerweise können die Bohraggregate an einer Grundplatte festgelegt und NC-gesteuert positionierbar sein.

Selbstverständlich können die Bohrstationen sowohl als frei programmierbare Bearbeitungsstationen Bohrungen vornehmen als auch fest bestückt ein einmal vorgegebenes Bohrbild erstellen, wozu die Bearbeitungsstation 8 zwei Portale 17,18 aufweist, deren Kreuzsupporte jeweils mit Bohraggregaten für ein bestimmtes, vorgegebenes Bohrbild versehen sind.

Die Bearbeitungsstationen 9 ist als Montagestation für Textilbeschläge von Lautsprecherfronten ausgelegt. Portale 19,20 mit Kreuzsupporten sind vergleichbar den vorherigen ausgelegt, weisen jedoch jeweils zwei Greif- und Montageeinheiten auf, die bspw. wieder jeweils mit vier Spreizdornsystemen versehen sind für die Aufnahme von vier bereitgelegten Textilbeschlägen. Jede Greifeinheit verfügt über wenigstens zwei NC-gesteuerte Positionierungsachsen für die Einstellung der Spreizdornsysteme bspw. auf den von der Werkstückbreite bestimmten Abstand der Befestigungsbohrungen.

Für das Bereitlegen der Textilbeschläge sind weiter zwei Sortier- und Zuführvorrichtungen 21,22 weiter vorgesehen, die bspw. als Schwingfördertöpfe mit Auslaufrinnen und mechanischer Vereinzelungsvorrichtung ausgebildet vier Textilbeschläge je Vorrichtung gleichzeitig zur Verfügung stellen können.

Mit einer Reinigungsstation 10 schließt die Bearbeitung in den Fertigungslinien 11,12, denn die Bearbeitungsstation 23 dient lediglich einer visuellen oder anderweitigen Kontrolle der fertigen Werkstücke, bevor diese taktversetzt in Auslaufzonen 24,25 für eine Entnahme durch die Entnahmevorrichtung 3 zur Verfügung stehen.

Gerade bei Hochgeschwindigkeitsfräs- oder Bohrspindeln ist die Standzeit der Werkzeuge sehr begrenzt. Ist darüber hinaus weiter ein häufiger Tausch der Werkzeuge nötig bei sich änderndem Fräs- oder Bohrbild, bspw. bei unterschiedlichen Werkstückabmessungen, so ist eine automatisierter Werkzeugaustausch regelmäßig zweckmäßig. So ist hier nur bei den beiden Frässtationen 4,5 jeweils ein zugeordnetes Zwischenmagazin 26,27 dargestellt, die für die Aufnahme von bspw. vier Werkzeugen als Tellermagazin um 90° drehbar ausgebildet sind für ein Bestücken der beiden Spindeln der Frässtationen 4,5 mit neuen Werkzeugen und für eine Übergabe der alten an ein Übergabesystem 29 eines Werkzeughauptmagazins 28.

Das Werkzeughauptmagazin ist hier als zweietagiges Linearmagazin ausgebildet, das sich parallel der Bearbeitungsstationen 4-8 erstreck. Es ist jedoch von diesen soweit beabstandet, dass ein manueller Austausch von Werkzeugen unproblematisch ist.

Der modulare Aufbau der Bearbeitungsstationen 4-9 ist auch bei den Grundmaschinen konsequent fortgeführt. So weist jede als Stahlkonstruktion ausgebildete Grundmaschine im wesentlichen baugleich ein Transportsystem für die Werkstücke und eine Werkstückspannung für ein Festlegen derselben während der Bearbeitung auf, wobei diese Funktionseinheiten je Fertigungslinie 10,11 wenigstens einmal, bei jeder Bearbeitungsstation 4-9 in doppelter Anzahl vorhanden sind

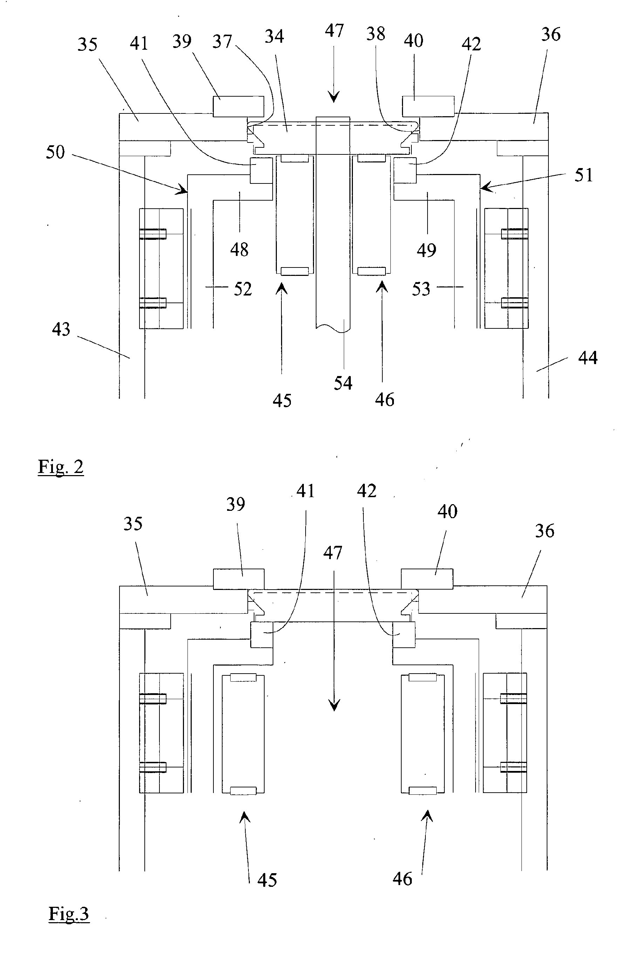

Die Fertigungslinien sind durch Mittelstücke 30 der Bearbeitungsstationen 4-9 voneinander getrennt. Insbesondere mit dem Maschinenbett verfahrbare Außenrahmen 31,32 spannen Werkstücke gegen diese Mittelstücke 30 und legen sie in Querrichtung fest, vgl. Fig. 2 und 3.

Die Fig. 2 und 3 zeigen in einer gebrochenen Stirnansicht eine Grundmaschine mit einem Werkstück 34, das zwischen einem Außenrahmen und einem Mittelstück 35,36 quer zu der Vorschubsrichtung unmittelbar von den auf das Werkstück 34 zuweisenden Längskanten 37,38 festgelegt ist. An den Längskanten 37,38 sind weiter auswechselbare Niederhalter 39,40 angeordnet, die den Rand des Werkstückes 34 überdecken. Gegen diese Niederhalter 39,40 wird das Werkstück 34 während der Bearbeitung weiter von darunterliegend angeordneten Spannvorrichtungen 41,42 gehalten, so dass auch Kräfte in vertikaler Richtung bspw. bei einem Bohren auftretend, sicher aufgefangen werden können.

Die Spannvorrichtungen 41,42, bspw. als Hubzylinder ausgelegt, sind an den Rahmenwangen 43,44 der Grundmaschine angebunden und entsprechend mit dem Außenrahmen bzw. dem Mittelstück 35,36 verfahrbar, so dass eine exakte Positionierung der Spannvorrichtungen unter den Niederhaltern gewährleistet ist bei jeder einzustellenden Werkzeugbreite.

Für den Vorschub von Werkstücken 34 sind je Fertigungslinie 11,12 zwei parallele Transportvorrichtungen 45,46 vorgesehen, die beispielsweise als Riemen- oder Bandförderer gegebenenfalls auch als Rollen- oder Kugelbahn ausgebildet sein können. Auch diese Transportvorrichtungen 45,46 können mit dem Außenrahmen bzw. Mittelstück 35,36 quer zu der Vorschubsrichtung verfahrbar angeordnet sein, so dass eine exakte Positionierung unter dem Werkstück 34 jederzeit gegeben ist.

Es hat sich häufig als zweckmäßig erwiesen, wenn die Transportvorrichtungen 45,46 eigenständig gegenüber dem Außenrahmen und dem Mittelstück 35,36 verschiebbar sind, insbesondere quer und vertikal zu diesen, so dass während der Bearbeitung eines Werkstückes 34 die Transportvorrichtungen 45,46 abgesenkt und quer verfahren außerhalb des Bearbeitungsprofiles 47 gleichsam geparkt werden können.

Bei dem Ausführungsbeispiel sind die Transportvorrichtungen 45,46 unter die freien Schenkel 48,49 der hierzu L-förmig ausgebildeten Trägervorrichtungen 50,51 der Spannvorrichtungen 41,42 verfahren, vgl. Fig. 3. Mit dem jeweils anderen Schenkel 52,53 sind die Trägervorrichtungen 50,51 an den aufgehenden Rahmenwangen 43,44 vertikal verfahrbar angeordnet. Infolge können die Spannvorrichtungen 41,42 passiv ohne eigene Antriebsvorrichtungen auch ausgebildet sein.

Durch die Anordnung zweier paralleler, voneinander beabstandeter Transportvorrichtungen 45,46 ist eine mittige Anordnung eines Längsanschlages 54 ermöglicht, so dass in Vorschubsrichtung das Werkstück 34 exakt ausgerichtet auch ist. Für den weiteren Vorschub kann ein solcher Längsanschlag 54 abgesenkt oder abgekippt werden.

Figur 3 zeigt, dass während der Bearbeitung das Bearbeitungsprofil 47 frei ist von irgendwelchen Vorrichtungen. Infolge können Restmaterialien, Ausfräsungen oder dergleichen mehr nach unten fallen, zwischen deny Spannvorrichtungen 41,42 bzw. zwischen den verfahrenen Transportvorrichtungen 45,46 hindurch auf eine Entsorgungsvorrichtung, die zweckmäßigerweise hier als durchgängiger Bandförderer beispielsweise ausgebildet ist, der die Abfälle sämtlicher Bearbeitungsstationen 4-9 zu einem Kopfende der Bearbeitungsvorrichtung transportiert.

Hierzu gehören auch die von den Transportvorrichtungen 45,46 beispielsweise mittels Bürsten entfernten Rückstände. Eine solche Reinigung der Transportvorrichtung 45,46 kann insbesondere auch in der in Figur 3 gezeigten Darstellung erfolgen, wenn solche Bürsten unterhalb der freien Schenkel 48,49 beispielsweise angeordnet sind.

Die Zuführung der zu bearbeitenden Werkstücke bzw. die Entnahme der fertigen Werkstücke erfolgt mittels angepaßter Portale der Zuführvorrichtung 2 bzw. der Entnahmevorrichtung 3, vgl. Fig. 1.

So weist die Zuführvorrichtung 2 an einem Portal 55 zwei Traversen, ausgebildet als Saugtraversen nach dem Stand der Technik, an zwei Supporten auf. Eine erste Traverse dient dem wechselnden Ablegen von zu bearbeitenden Werkstücken in dem Einlauf 56 der Fertigungslinie 11 bzw. 57 der Fertigungslinie 12. Die Werkstücke werden hierzu den Materialstapeln 58,59 entnommen. Ruhen diese Materialstapel beispielsweise auf Hubtischen, kann auf eine Hubvorrichtung für die erste Traverse verzichtet werden.

Eine zweite Traverse, beispielsweise mit Saugventilen und Klinken versehen, entnimmt die Werkstücke einem Palettenstapel 60, der beispielsweise auf einer Rollenbahn herangeführt wurde, und setzt die Werkstücke auf den Materialstapeln 58,59 ab, ggf. auf einer Zwischenablage 61. Ist der Palettenstapel 60 umgesetzt, können mittels der Klinken auch die Paletten umgesetzt werden.

Die Entnahmevorrichtung 3 ist im wesentlichen ähnlich aufgebaut mit einem Portal 62, aufweisend wiederum zwei Traversen an zwei Supporten.

Eine erste Traverse entnimmt wechselnd der Auslaufzone 24 der Fertigungslinie 11 bzw. der Auslaufzone 25 der Fertigungslinie 12 fertig bearbeitete Werkstücke und setzt diese auf zwei Materialstapel 63,64 um. Die zweite Traverse entnimmt die fertigen Werkstücke den Materialstapeln 63,64 und setzt diese beispielsweise auf einem auf einer Rollbahn verfahrbaren Palettestapel 65 oder auf einer Zwischenablage 66 für ein späteres palettieren ab.

### Bezugszeichenliste:

- 1.: Bearbeitungsvorrichtung35
- 2.: Zuführvorrichtung
- 3.: Entnahmevorrichtung
- 4.: Bearbeitungsstation
- 5.: Bearbeitungsstation
- 6.: Bearbeitungsstation
- 7.: Bearbeitungsstation
- 8.: Bearbeitungsstation
- 9.: Bearbeitungsstation
- 10.: Bearbeitungsstation
- 11.: Fertigungslinie
- 12.: Fertigungslinie
- 13.: Portal
- 14.: Portal
- 15.: Portal
- 16.: Portal
- 17.: Portal
- 18.: Portal
- 19.: Portal
- 20.: Portal
- 21.: Sortier- und Zuführgerät
- 22.: Sortier- und Zuführgerät
- 23.: Kontrollstation
- 24.: Auslaufzone
- 25.: Auslaufzone
- 26.: Zwischenmagazin
- 27.: Zwischenmagazin
- 28.: Werkzeughauptmagazin
- 29.: Übergabesystem
- 30.: Mittelstück
- 31.: Außenrahmen
- 32.: Außenrahmen
- 33.: Mittelstück
- 34.: Werkstück
- 35.: Außenrahmen bzw. Mittelstück
- 36.: Außenrahmen bzw. Mittelstück
- 37.: Längskante
- 38.: Längskante
- 39.: Niederhalter
- 40.: Niederhalter
- 41.: Spannvorrichtung
- 42.: Spannvorrichtung
- 43.: Rahmenwange
- 44.: Rahmenwange
- 45.: Transportvorrichtung
- 46.: Transportvorrichtung
- 47.: Bearbeitungsprofil
- 48.: Schenkel
- 49.: Schenkel
- 50.: Trägervorrichtung
- 51.: Trägervorrichtung
- 52.: Schenkel
- 53.: Schenkel
- 54.: Längsanschlag
- 55.: Portal
- 56.: Einlauf
- 57.: Einlauf
- 58.: Materialstapel
- 59.: Materialstapel
- 60.: Palettenstapel
- 61.: Zwischenablage
- 62.: Portal
- 63.: Materialstapel
- 64.: Materialstapel
- 65.: Palettenstapel
- 66.: Zwischenablage

## Patentansprüche

1. In-Line-Bearbeitungsvorrichtung (1) für eine taktweise Bearbeitung von Holz-, Faser- und Kunststoffplatten oder dergleichen, insbesondere Lautsprecherfronten und/oder Rückseiten, in einer Vielzahl unmittelbar aufeinander abfolgender Bearbeitungsstationen (4-10), die von zwei parallelen Fertigungslinien (11,12) durchlaufen werden, die taktversetzt jeweils eine Bearbeitung in einer Bearbeitungsstation (4-10) bzw. einen Vorschub gestatten.

2. Bearbeitungsvorrichtung nach einem oder mehreren der vorangehenden Ansprüche, **dadurch gekennzeichnet, dass** eine Bearbeitungsstation (4) mit wenigstens einem Portal (13,14) mit einer Arbeitsvorrichtungen beide Fertigungslinien (11,12) quer zu der Vorschubsrichtung überspannt.

3. Bearbeitungsvorrichtung nach einem oder mehreren der vorangehenden Ansprüche, **dadurch gekennzeichnet, dass** eine Bearbeitungsstation (4) zwei Portale (13,14) mit jeweils einer Arbeitsvorrichtungen aufweist, die beide Fertigungslinien (11,12) quer zu der Vorschubsrichtung überspannen.

4. Bearbeitungsvorrichtung nach einem oder mehreren der vorangehenden Ansprüche, **dadurch gekennzeichnet, dass** wenigstens zwei aufeinanderfolgenden Bearbeitungsstationen (4,5) jeweils ein Zwischenmagazin (26,27) zugeordnet ist für die Aufnahme, Rücknahme und Übergabe von Werkzeugen an die jeweiligen Arbeitsvorrichtungen und für die Annahme und Rückgabe an ein Übergabesystem (29) eines Werkzeughauptmagazins (28).

5. Bearbeitungsvorrichtung nach einem oder mehreren der vorangehenden Ansprüche, **dadurch gekennzeichnet, dass** eine Bearbeitungsstation (4) für jede Fertigungslinie (11,12) wenigstens einen, gegen ein Mittelstück (30) auf die Werkstückbreite einstellbaren Außenrahmen (31,32) aufweist.

6. Bearbeitungsvorrichtung nach einem oder mehreren der vorangehenden Ansprüche, **dadurch gekennzeichnet, dass** ein Außenrahmen (31,32) mit einem Grundmaschinenbett quer zu der Vorschubrichtung verfahrbar ist.

7. Bearbeitungsvorrichtung nach einem oder mehreren der vorangehenden Ansprüche, **dadurch gekennzeichnet, dass** an den dem Werkstück (34) zugewandten Längskanten (37,38) von Außenrahmen (35;36) und einem Mittelstück (35;36) wechselbare Niederhalter (39,40) angeordnet sind, gegen die von unten jeweils eine Spannvorrichtung (41,42) das Werkstück (34) während der Bearbeitung hält.

8. Bearbeitungsvorrichtung nach einem oder mehreren der vorangehenden Ansprüche, **dadurch gekennzeichnet, dass** eine Spannvorrichtung (41;42) mit dem Außenrahmen (35;36) verfahrbar ist.

9. Bearbeitungsvorrichtung nach einem oder mehreren der vorangehenden Ansprüche, **dadurch gekennzeichnet, dass** eine Spannvorrichtung (41,42) an einer in einem Querschnitt im wesentlichen L-förmigen Trägervorrichtung (50,51) angeordnet ist, die mit einem Schenkel (52,53) an einer aufgehenden Rahmenwange (43,44) angebunden ist und auf einem freien, auf das Werkstück (34) zuweisenden Schenkel (48,49) die Spannvorrichtung (41,42) trägt.

10. Bearbeitungsvorrichtung nach einem oder mehreren der vorangehenden Ansprüche, **dadurch gekennzeichnet, dass** die Trägervorrichtungen (50,51) vertikal verfahrbar an den aufgehenden Rahmenwangen (43,44) angebunden sind.

11. Bearbeitungsvorrichtung nach einem oder mehreren der vorangehenden Ansprüche, **dadurch gekennzeichnet, dass** für jede Fertigungslinie (11,12) zwei parallele Transportvorrichtungen (45,46) für ein Werkstück (34) vorgesehen sind.

12. Bearbeitungsvorrichtung nach einem oder mehreren der vorangehenden Ansprüche, **dadurch gekennzeichnet, dass** eine Transportvorrichtung (45;46) mit dem Außenrahmen (31;32) quer zu der Vorschubsrichtung verfahrbar ist.

13. Bearbeitungsvorrichtung nach einem oder mehreren der vorangehenden Ansprüche, **dadurch gekennzeichnet, dass** die Transportvorrichtungen (45,46) gegenüber dem Außenrahmen (35;36) bzw. Mittelstück (36;35) quer zu der Vorschubsrichtung verfahrbar sind.

14. Bearbeitungsvorrichtung nach einem oder mehreren der vorangehenden Ansprüche, **dadurch gekennzeichnet, dass** die Transportvorrichtungen (35,36) absenkbar sind.

15. Bearbeitungsvorrichtung nach einem oder mehreren der vorangehenden Ansprüche, **dadurch gekennzeichnet, dass** während der Bearbeitung eines Werkstücks (34) die Transportvorrichtungen (45,46) abgesenkt und aus dem Bearbeitungsprofil (47) gefahren sind.

16. Bearbeitungsvorrichtung nach einem oder mehreren der vorangehenden Ansprüche, **dadurch gekennzeichnet, dass** während der Bearbeitung die Transportvorrichtungen (45,46) unter die freien Schenkel (48,49) der Trägervorrichtungen (50,51) gefahren sind.

17. Bearbeitungsvorrichtung nach einem oder mehreren der vorangehenden Ansprüche, **dadurch gekennzeichnet, dass** Reinigungsvorrichtungen für die Transportvorrichtungen (50,51) vorgesehen ist.

18. Bearbeitungsvorrichtung nach einem oder mehreren der vorangehenden Ansprüche, **dadurch gekennzeichnet, dass** unterhalb der Transportvorrichtungen (45,46) eine das Bearbeitungsprofil (47) überdeckende Entsorgungsvorrichtung für Reststücke und dergleichen vorgesehen ist.

19. Bearbeitungsvorrichtung nach einem oder mehreren der vorangehenden Ansprüche, **dadurch gekennzeichnet, dass** eine Zuführvorrichtung (2) mit einem zwei Traversen an zwei Supporten aufweisenden Portal (55) vorgesehen ist, von denen eine erste Traverse von wenigstens einem Materialstapel (58,59) zu bearbeitende Werkstücke wechselweise in den jeweiligen Einlauf (56,57) einer Fertigungslinie (11,12) umsetzt und die zweite Traverse angelieferte Werkstücke auf den wenigstens einen Materialstapel (58,59) oder einer Zwischenablage (61) absetzt.

20. Bearbeitungsvorrichtung nach einem oder mehreren der vorangehenden Ansprüche, **dadurch gekennzeichnet, dass** eine Entnahmevorrichtung (3) mit einem zwei Traversen an zwei Supporten aufweisenden Portal (62) vorgesehen ist, von denen eine erste Traverse fertige Werkstücke wechselweise von dem jeweiligen Auslauf (24,25) einer Fertigungslinie (11,12) auf wenigstens einen Materialstapel (63,64) umsetzt und die zweite Traverse die Werkstücke von dem wenigstens einen Materialstapel (62,63) auf eine Fördervorrichtung für einen Abtransport oder eine Zwischenablage (66).
